# EUROPEAN PATENT SPECIFICATION

(11) **EP 4 559 151 B1**
(45) Date of publication and mention of the grant of the patent: **02.09.2026**
(21) Application number: 22755126.4
(22) Date of filing: 21.07.2022
(51) Int. Cl.: H04L 12/12

(54) **INDUSTRIAL CONTROLLER WITH WAKE-ON-LAN FUNCTIONALITY**
INDUSTRIELLE STEUERUNG MIT WAKE-ON-LAN-FUNKTIONALITÄT
DISPOSITIF DE COMMANDE INDUSTRIEL DOTÉ D'UNE FONCTIONNALITÉ DE RÉVEIL SUR RÉSEAU LOCAL

(43) Date of publication of application: 28.05.2025
(73) Proprietor: ABB SCHWEIZ AG, 5400 Baden (CH)
(72) Inventor: GAO, Yang, 112 18 Stockholm (SE)
(74) Representative: Kransell & Wennborg KB
(86) International application number: PCT/EP2022/070515
(87) International publication number: WO 2024/017476

(56) References cited:
- EP-A1- 3 872 602
- GB-A- 2 330 928
- US-A1- 2010 125 726

## Description

### TECHNICAL FIELD

The present disclosure relates to the field of industrial control. In particular, it proposes a novel industrial controller with a wake-on-LAN functionality.

### BACKGROUND

A so-called wake-on-LAN functionality can be helpful to save energy when a part of an automated industrial production line is temporarily shut down. In this condition, the industrial controller associated with the shut-down part of the production line is powered off and enters a sleep mode. The industrial controller remains asleep until woken up by a wakeup signal or wakeup message received over a communication network to which it connected. The powering-off strategy is not always possible to implement in a production line equipped with a centralized safety function that periodically monitors or polls safety-critical actuators and sensors. Indeed, the safety actuators and sensors in the sleeping industrial controller will be deemed absent or malfunctioning, although they are just voluntarily powered off in a condition where this does not pose a safety risk.

The prior art includes various proposals to avoid this inconvenient situation. First, and somewhat outside the technical field of the present application, US20150006930A1 discloses an imaging device with a power saving mode which disconnects power from the AC mains during periods of device inactivity. To allow external monitoring of user-associated events while disconnected from the AC mains, power is drawn from an alternative power source separate from the AC mains to power up a microprocessor unit (MPU) which is configured to respond to monitoring inputs. When such monitoring inputs are received, the connection with the AC mains is re-established using a switch, so as to provide AC power to the device. The alternative power source may include a battery or a capacitor.

A second example is EP2518935A1, which discloses an automation network having a control unit, a network switch, and an automation unit without energy management. The automation network includes Power-over-Ethernet (PoE) connections, which are powered by the network switch, as well as normal Ethernet connections. While the network switch is always powered on, the automation unit can be selectively powered off. To wake the automation unit up, the control unit sends a wake-on-LAN signal to a wake-on-LAN module in the automation unit. The wake-on-LAN module responds by connecting the full automation unit to an external power supply, such as 24 V or 230 V.
US2010125726A1 discloses a thin client (thin client host) configured for use in an active node and a sleep mode. The document addresses the problem of enabling the thin client to switch from the sleep mode to the active node when a Wake-on-LAN packet arrives, while otherwise minimizing the power usage in the sleep mode. By setting a power switch in different positions, the full thin client is supplied by a power module when the client is in active mode, whereas the processing module is supplied over a direct path from the power switch when the client is in sleep mode.
It would be desirable to implement a wake-on-LAN functionality compatible with a centralized safety chain while reducing the structural complexity and/or the usage of harmful battery and capacitor materials.

### SUMMARY

One objective of the present disclosure is to make available an industrial controller configured to drive an industrial appliance, wherein the industrial controller is amenable to monitoring by a safety chain even in a sleep mode. Another objective is to make available a method of operating an industrial controller in an energy-saving way. A particular objective is to propose such an industrial controller for driving an industrial robot. Preferably, these objectives shall be achieved with a limited structural complexity. Further preferably, the objectives shall be achieved with a limited use of batteries and capacitors.
At least some of these objectives are achieved by the invention as defined by the independent claims. The dependent claims relate to advantageous embodiments of the invention.
In a first aspect of the invention, there is provided an industrial controller according to claim 1.
Thanks to the above-described behavior of the power switch, the desired wake-on-LAN behavior is achieved without having to provide an alternative power source inside or outside the industrial controller. Because the power switch supplies the network interface but not the power module in the sleep mode, the power module can be turned off in the sleep mode, thereby avoiding wasting energy on idling or standby operation. Knowing that the power rating of the industrial appliance may be one or more orders of magnitude greater than the power rating of the network interface (the latter being typically in the range 6-10 W), the availability of the sleep mode allows a significant energy saving.

In a second aspect of the invention, there is provided a method of operating an industrial controller with the general characteristics described above. In particular, the industrial controller may comprise a drive module for driving an industrial appliance, a network interface towards an external network, a power module for directly supplying the drive module and network interface, and a power switch connected to an input power source. The method includes receiving an indication whether to operate in work mode or sleep mode. In response to a work-mode indication, the power switch is caused to supply the power module, and the power module is caused to supply the drive module and network interface. Otherwise, in response to a sleep-mode indication, the power switch is caused to supply the network interface but not the power module.

The method according to the second aspect generally shares the technical effects and advantages associated with the first aspect. Further, it can be implemented with a corresponding degree of technical variation.

The invention further relates to a computer program containing instructions for causing a computer, or the industrial controller in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless this is explicitly stated.

### BRIEF DESCRIPTION OF THE DRAWINGS

Aspects and embodiments are now described, by way of example, with reference to the accompanying drawings, on which:
figure 1 shows an industrial controller arranged to drive an industrial appliance; and
figure 2 is a block diagram of a method for operating an industrial controller of the type shown in figure 1.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

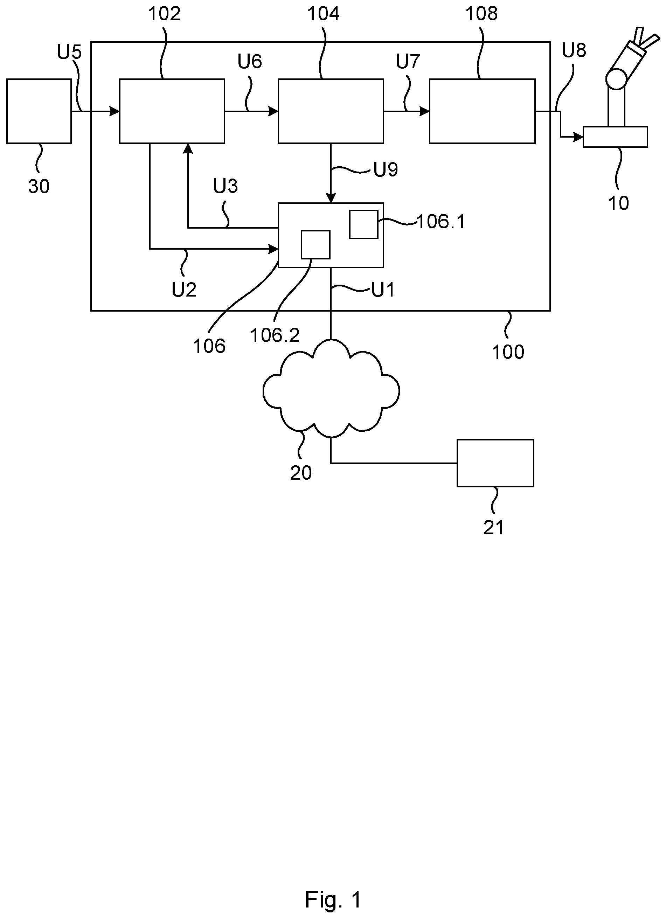

Figure 1 shows an industrial controller 100 arranged to drive an industrial appliance 10. The industrial controller 100 and the industrial appliance 10 may be arranged in an industrial facility, such as a plant or factory or site. The industrial appliance 10 typically comprises a plurality of actuators, such as electric motors. The actuators in the industrial appliance 10 are configured to receive at least one drive signal U8 that carries control information and power. The drive signal U8 is the industrial appliance's 10 main or sole source of energy. For example, each drive signal U8 may be a modulated single- or multi-phase AC signal suitable to cause an electric motor to exert a desired torque, move at a desired linear or angular speed, or perform a similar desired operation. Because the drive signal U8 will have a different waveform to achieve different torques and different speeds, it may be considered to have a content of control information. Alternatively, the drive signal U8 can be composed of a power channel and a separate control-information channel.

The industrial appliance 10 may comprise processing equipment (e.g., treating, cutting, shaping, molding, vibrating, pressing, coating, heating), materialhandling equipment (e.g., picking, placing, turning, packing, conveying) and/or inspection equipment (e.g., optical imaging, X-ray imaging, mechanical, electric or chemical testing). In particular, the industrial appliance 10 may comprise at least one industrial robot, as suggested in figure 1, or at least one automated guided vehicle (AGV).

The industrial controller 100 is connected over a network interface 106 to an external network 20, such as a data network or communication network. The industrial controller 100 may further include an internal network adapted to convey internal data signals among components of the industrial controller 100, as suggested in figure 1. The external network 20 may be wired or wireless, and it may be designed for local-area or wide-area communication.

The network interface 106 may be multifunctional. It may be used, on the one hand, for remote monitoring of the industrial appliance 10. The remote monitoring may be carried out by a centralized safety function (or safety chain), which may be embodied as a software application executing on a host computer 21 connected to the external network 20. The host computer 21 may be a controller superior to the industrial controller 100, such as a programmable logic controller (PLC) in the industrial facility. The safety function executing on the host computer 21 may be responsible for monitoring the entire industrial facility or a pre-configured portion of the industrial facility, and it may for example use the Profinet^{™} or Profisafe^{™} protocol. The safety function's monitoring may include interrogating (e.g., poll, ping) the industrial controller 100 about the presence and/or health of predefined components. Alternatively, the monitoring may use a protocol by which the industrial controller 100 (and, possibly, all similar units in the same facility) shall send status reports to the safety function of their own motion, e.g., in a periodic or event-triggered fashion. In particular, the monitoring may aim to confirm the presence and operability of safety-relevant sensors (e.g., fire sensors, safety light curtains, emergency stop switches) and safety-relevant actuators (e.g., fire sprinklers, fire doors, gates). The network interface 106 may be equipped with a safety controller 106.1 (e.g., a programmable processor) configured to carry out tasks related to such monitoring.

On the other hand, the network interface 106 may assist remote controlling of the industrial appliance 10. For example, the network interface 106 may be responsible for receiving high-level instructions to be executed, for acknowledging instructions, and/or for transmitting reports whether earlier instructions have been successfully carried out. The high-level instructions may be received from an operator or a control application in a superior controller, such as a task scheduler. In remote controlling of the industrial appliance 10, the network interface 106 may be configured to convert the high-level instructions into machinelevel instructions suitable for the actuators in the industrial appliance 10. The remote controlling may further include the network interface 106 obtaining sensor data from the industrial appliance 10 and relaying suitable parts thereof to the operator or task scheduler. These and other tasks can be executed by processing circuitry 106.2 in the network interface 106.

The industrial controller 100 is further connected, over a power switch (or wake-on-LAN module) 102, to an input power source 30. The input power source may be an electric grid, with 400 V AC or a higher grid voltage. Alternatively, the input power source 30 may be an output from a local power conversion plant (not shown) or a battery.

An output side of the power switch 102 is connected to a power module 104 and the network interface 106. The power module 104 is connected to a drive module 108, which is configured to drive the industrial appliance 10, and to the network interface 106. The power module 104 and the drive module 108 may be separate components, as shown in figure 1, or integrated into a single component. The drive module 108 may be equipped with suitable components, such as analog voltage converters or solid-state power electronic components, so as to generate the signal U8 described above. As shown in figure 1, a direct connection U7 from the power module 104 to the drive module 108 may be provided. The connection U7 is direct in the sense that it does not pass via any further component in-between the power module 104 and the drive module 108 and/or in the sense that the drive module 108 is not embedded in any other component but interfaces directly with the power module 104. The direct connection U7 allows the power module 104 to directly supply the drive module 108. In embodiments where the input power source 30 is an AC source and the drive module 108 is designed for DC power, the power module 104 may carry out an AC-to-DC conversion (rectification) and apply the output voltage to a DC bus. The DC bus, or a part thereof, forms the connection U7. The output voltage may be 400 V DC, and the power rating may be of the order of at least 100 W, at least 1 kW, at least 10 kW or even more. Alternatively or additionally, the power module 104 can be configured to supply the network interface 106 with a suitable conditioned voltage, such as 24 V DC, over connection U9. The connection U9 may be implemented as a (part of) a voltage trunk bus. Typical power ratings of the network interface 106 may be in the range of 6-10 W. The conditioning may include downtransformation and rectification to the example voltage 24 V DC. The conditioning may further include various types of filtering (to block voltage spikes), stabilization (of frequency, of voltage) and/or a temporary power backup.

The industrial controller 100 is operable in a work mode (or active mode) and a sleep mode (or energy-saving mode), and possibly in further modes. The power switch 102 carries out several functions related to the switching between modes. This may be governed by a control signal U3 to the power switch 102 from the network interface 106. The network interface 106 may be configured to switch the control signal U3 from a value representing sleep mode into a value representing work mode in response to a wakeup signal that the network interface 106 has received over the external network 20. The opposite switching of the control signal U3, from work mode into sleep mode, may be triggered by a similar externally received signal or by an internal process in the industrial controller 100, such as a timeout.

In the work mode, the power switch 102 supplies the power module 104. In the sleep mode, the power switch 102 supplies the network interface 106 over a power connection U2, but not the power module 104.

Clearly, because the power module 104 receives power from the input power source 30 via the power switch 102 in the work mode, the power module 104 can directly supply the drive module 108. Further, it is possible in the work mode for the power module 104 to supply the network interface 106 too, indeed over connection U9. While the power module 104 is configured with this behavior in some embodiments, it is foreseen in other embodiments that the network interface 106 shall be supplied by the power switch 102 in the work mode as well as the sleep mode. Common to all these embodiments, the network interface 106 is supplied with suitable drive power in the sleep mode and the work mode, and it is therefore capable of reporting, via the external network 20, a status of the industrial appliance 10 in both modes. As mentioned above, the status may include a confirmation that a predefined set of safety-relevant sensors and actuators are present and functioning.

Moreover, in some embodiments, the power switch 102 may be configured to directly connect the power module 104 to the input power source 30 in the work mode. This is to say, the signal U6 reaching the power module 104 is substantially identical to the signal U5 from the input power source 30. In other words, the power switch 102 acts in the work mode as a temporary connector between the power module 104 and the input power source 30. In other embodiments, the power switch 102 processes the signal U5 from the input power source 30 in some suitable way and supplies the power module 104 with an output of the processing.

In order for the power switch 102 to supply, in the sleep mode, the network interface 106, the power switch 102 comprises components (not shown) for conditioning the signal U5 from the input power source 30 to be suitable for driving the network interface 106. The conditioning may be similar as in the power module 104, and it may be performed by digital power electronics and/or analog components. In some embodiments, as shown in figure 1, the network interface's 106 data connection U1 towards the external network 20 is separate from the power connection U2. In other embodiments, the connections U1 and U2 could be integrated and form a power-over-Ethernet connection.

In one specific embodiment of the industrial controller 100, the processing circuitry 106.2 in the network interface 106 is configured to operate at lower clock frequency in the sleep mode than in the work mode. Similarly, the execution of unnecessary background processes may be suspended.

In another specific embodiment of the industrial controller 100, the power switch 102 is adapted for retrofitting. This is to say, it is possible (or easy) to mount the power switch 102 on an existing industrial controller. The existing industrial controller may constitute legacy equipment. The existing industrial controller may be complete in itself and operational for the task of driving the industrial appliance 10; the adding of the power switch 102 augments the functionality with the sleep mode with the characteristics described above.

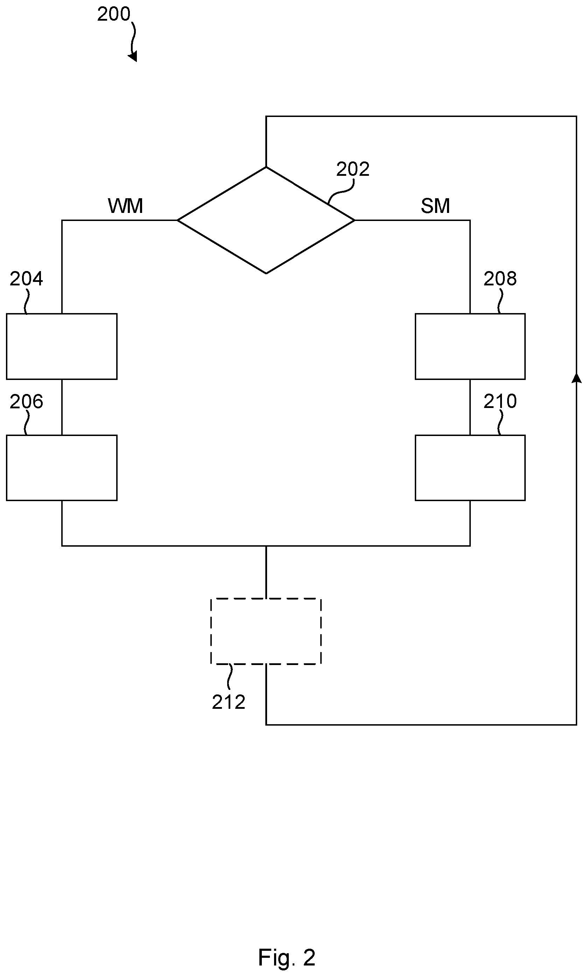

With reference now to the flowchart in figure 2, a method 200 of operating an industrial controller 100 with the structure depicted in figure 1 will now be described. The method 200 may be performed by the network switch 106 in the industrial controller 100. Alternatively, the method 200 may be performed by transmitting suitable instructions or commands to the industrial controller 100 from a remote entity, such as a host computer 21.

In a first step 202 of the method 200, an indication is received whether to operate in work mode or sleep mode. The indication may be received by the network switch 106 from the external network 20. For safety reasons, an indication transmitted over the external network 20 should preferably be expressed by a 'magic number' (or 'magic constant'), i.e., a pre-agreed bitstring sufficiently long or distinctive that it is very unlikely to be confused with signal artefacts and/or very difficult to be guessed by an attacker. Instead of the indication being received by the network switch 106 from the external network 20, the indication can consist of user input given to a remote entity - separate from the industrial controller - which executes the method 200. Further alternatively, the indication may consist of an instruction from an executing control application. The act of "receiving" the indication may include having the executing entity read the indication's current value from a memory (polling). The value of the received indication determines whether the execution flow of the method 200 will continue in accordance with work mode (WM, left-hand branch) or in accordance with sleep mode (SM, right-hand branch).

In response to receiving a sleep-mode indication, the power switch 102 is caused 208 to supply the network interface 106 but not the power module 104. The power switch 102 may be configured to galvanically isolate the power module 104 from the input power source 30 in the sleep mode. Optionally, the network interface 106 is caused 210 to operate at a reduced clock frequency when in sleep mode.

In response to receiving a work-mode indication (or wakeup indication), the power switch 102 is caused 204 to supply the power module 104, and the power module 104 is caused 206 to supply the drive module 108. In embodiments where the network interface 106 is caused to operate at reduced clock frequency in the sleep mode, it resumes normal operation.

As suggested by the upward segment in figure 2, the execution flow is resumed from step 202 when a new mode indication is received, whereby the subsequent conditional steps are repeated. Alternatively, the execution flow is resumed from step 202 periodically or after expiry of the latest received indication by retrieving a current value of the mode indication.

The steps 204 and 208 may be carried out by having the network interface 106 apply a suitable value of the control signal U3 to the power switch 102.

The method 200 may include a further step of 212 reporting the status of the industrial appliance 10. This step 212 is executed regardless of the work-mode or sleep-mode indication. Accordingly, the status is reported even if the industrial controller 100 is in the sleep mode, or it is about to switch into the sleep mode in response to a received indication. The step 212 may include listening to incoming communications from the safety function in the industrial facility, e.g., Profinet^{™} or Profisafe^{™} communications, and replying to these accordingly.

As mentioned previously, it not essential to the present invention whether, in the work mode, the network interface 106 is supplied via the power module 104 or directly from the power switch 102. The second option may avoid some duplication of components, notably circuitry for providing the conditioned voltage to the network interface 106. Under the first option, the transitions to and from sleep mode will include handing over the powering of the network interface 106 from the power module 104 to the power switch 102, and vice versa.

The aspects of the present disclosure have mainly been described above with reference to a few embodiments.

## Claims

1. An industrial controller (100) operable in a work mode and a sleep mode, the industrial controller comprising:
a network interface (106) configured to communicate with an external network (20);
a drive module (108) configured to drive an industrial appliance (10) which has a power rating one or more orders of magnitude greater than the network interface's power rating; and
a power module (104) configured to directly supply the drive module in the work mode,
a power switch (102) connected to an input power source (30) and configured to supply the power module in the work mode, and to supply the network interface but not the power module in the sleep mode.

2. The industrial controller (100) of claim 1, wherein the network interface (106) comprises:
a data connection (U1) towards the external network (20); and
a power connection (U2), separate from the data connection, towards the power switch (102).

3. The industrial controller (100) of claim 1 or 2, wherein the power module (104) is configured to directly supply the network interface (106) in the work mode.

4. The industrial controller (100) of claim 1 or 2, wherein the power switch (102) is configured to not supply the network interface (106) in the work mode.

5. The industrial controller (100) of claim 1 or 2, wherein the power switch (102) is configured to supply the network interface (106) in the work mode.

6. The industrial controller (100) of any of the preceding claims, wherein the power switch (102) is configured to directly connect the power module (104) to the input power source (30) in the work mode.

7. The industrial controller (100) of any of the preceding claims, wherein the power switch (102) is configured to selectively operate in work mode or sleep mode in accordance with an indication (U3) from the network interface (106).

8. The industrial controller (100) of any of the preceding claims, wherein the industrial appliance (10) is an industrial robot.

9. The industrial controller (100) of any of the preceding claims, wherein the network interface (106) includes a safety controller (106.1) configured to report, via the external network (20), a status of the industrial appliance (10) in the work mode and the sleep mode.

10. The industrial controller (100) of any of the preceding claims, wherein the network interface (106) includes processing circuitry (106.2) configured to operate at lower clock frequency in the sleep mode than in the work mode.

11. The industrial controller (100) of any of the preceding claims, wherein the power switch (102) is adapted for retrofitting.

12. A method (200) of operating an industrial controller (100) comprising:
a network interface (106) for communicating with an external network (20);
a drive module (108) for driving an industrial appliance (10) which has a power rating one or more orders of magnitude greater than the network interface's power rating;
a power module (104) for directly supplying the drive module and network interface; and
a power switch (102) connected to an input power source (30),
the method including:
receiving (202) an indication whether to operate in work mode or sleep mode;
in response to a work-mode indication,
causing (204) the power switch to supply the power module; and
causing (206) the power module to supply the drive module;
in response to a sleep-mode indication:
causing (208) the power switch to supply the network interface but not the power module.

13. The method (200) of claim 12, wherein the indication (U3) is received (202) from the network interface (106).

14. The method (200) of claim 12 or 13, further comprising, in response to a sleep-mode indication, causing (210) the network interface to operate at a reduced clock frequency.

15. The method (200) of any of claims 12 to 14, further comprising:
reporting (212) a status of the industrial appliance (10) independently of the indication.

16. A computer program comprising instructions which, when executed in the processor of a computer, execute the steps of the method of claim 12.

## Patentansprüche

1. Industriesteuereinheit (100), die in einer Arbeitsbetriebsart und einer Ruhebetriebsart betreibbar ist, wobei die Industriesteuereinheit Folgendes umfasst:
eine Netzschnittstelle (106), die dazu ausgelegt ist, mit einem externen Netz (20) zu kommunizieren;
ein Antriebsmodul (108), das dazu ausgelegt ist, ein Industriegerät (10) anzutreiben, das eine Nennleistung aufweist, die eine oder mehrere Größenordnungen größer als die Nennleistung der Netzschnittstelle ist; und
ein Leistungsmodul (104), das dazu ausgelegt ist, das Antriebsmodul in der Arbeitsbetriebsart direkt zu versorgen,
einen Leistungsschalter (102), der mit einer Eingangsleistungsquelle (30) verbunden ist und dazu ausgelegt ist, in der Arbeitsbetriebsart das Leistungsmodul zu versorgen und in der Ruhebetriebsart die Netzschnittstelle, aber nicht das Leistungsmodul zu versorgen.

2. Industriesteuereinheit (100) nach Anspruch 1, wobei die Netzschnittstelle (106) Folgendes umfasst:
eine Datenverbindung (U1) zum externen Netz (20); und
eine Leistungsverbindung (U2), die von der Datenverbindung getrennt ist, zu dem Leistungsschalter (102) .

3. Industriesteuereinheit (100) nach Anspruch 1 oder 2, wobei das Leistungsmodul (104) dazu ausgelegt ist, die Netzschnittstelle (106) in der Arbeitsbetriebsart direkt zu versorgen.

4. Industriesteuereinheit (100) nach Anspruch 1 oder 2, wobei der Leistungsschalter (102) dazu ausgelegt ist, die Netzschnittstelle (106) in der Arbeitsbetriebsart nicht zu versorgen.

5. Industriesteuereinheit (100) nach Anspruch 1 oder 2, wobei der Leistungsschalter (102) dazu ausgelegt ist, die Netzschnittstelle (106) in der Arbeitsbetriebsart zu versorgen.

6. Industriesteuereinheit (100) nach einem der vorstehenden Ansprüche, wobei der Leistungsschalter (102) dazu ausgelegt ist, das Leistungsmodul (104) in der Arbeitsbetriebsart direkt mit der Eingangsleistungsquelle (30) zu verbinden.

7. Industriesteuereinheit (100) nach einem der vorstehenden Ansprüche, wobei der Leistungsschalter (102) dazu ausgelegt ist, gemäß einer Angabe (U3) von der Netzschnittstelle (106) selektiv in der Arbeitsbetriebsart oder in der Ruhebetriebsart zu arbeiten.

8. Industriesteuereinheit (100) nach einem der vorstehenden Ansprüche, wobei das Industriegerät (10) ein Industrieroboter ist.

9. Industriesteuereinheit (100) nach einem der vorstehenden Ansprüche, wobei die Netzschnittstelle (106) eine Sicherheitssteuereinheit (106.1) enthält, die dazu ausgelegt ist, über das externe Netz (20) einen Status des Industriegeräts (10) in der Arbeitsbetriebsart und in der Ruhebetriebsart zu melden.

10. Industriesteuereinheit (100) nach einem der vorstehenden Ansprüche, wobei die Netzschnittstelle (106) eine Verarbeitungsschaltungsanordnung (106.2) enthält, die dazu ausgelegt ist, in der Ruhebetriebsart bei einer niedrigeren Taktfrequenz als in der Arbeitsbetriebsart zu arbeiten.

11. Industriesteuereinheit (100) nach einem der vorstehenden Ansprüche, wobei der Leistungsschalter (102) zum Nachrüsten ausgelegt ist.

12. Verfahren (200) zum Betreiben einer Industriesteuereinheit (100), die Folgendes umfasst:
eine Netzschnittstelle (106) zum Kommunizieren mit einem externen Netz (20);
ein Antriebsmodul (108) zum Antreiben eines Industriegeräts (10), das eine Nennleistung aufweist, die um eine oder mehrere Größenordnungen größer als die Nennleistung der Netzschnittstelle ist;
ein Leistungsmodul (104) zum direkten Versorgen des Antriebsmoduls und der Netzschnittstelle; und
einen Leistungsschalter (102), der mit einer Eingangsleistungsquelle (30) verbunden ist,
wobei das Verfahren Folgendes enthält:
Empfangen (202) einer Angabe, ob in einer Arbeitsbetriebsart oder in einer Ruhebetriebsart gearbeitet werden soll;
in Reaktion auf eine Angabe der Arbeitsbetriebsart Veranlassen (204), dass der Leistungsschalter das Leistungsmodul versorgt; und
Veranlassen (206), dass das Leistungsmodul das Antriebsmodul versorgt;
in Reaktion auf eine Anzeige der Ruhebetriebsart:
Veranlassen (208), dass der Leistungsschalter die Netzschnittstelle, aber nicht das Leistungsmodul versorgt.

13. Verfahren (200) nach Anspruch 12, wobei die Angabe (U3) von der Netzschnittstelle (106) empfangen wird (202).

14. Verfahren (200) nach Anspruch 12 oder 13, das ferner in Reaktion auf eine Angabe der Ruhebetriebsart das Veranlassen (210) der Netzschnittstelle, mit einer verringerten Taktfrequenz zu arbeiten, umfasst.

15. Verfahren (200) nach einem der Ansprüche 12 bis 14, das ferner Folgendes umfasst:
Melden (212) eines Status des Industriegeräts (10) unabhängig von der Angabe.

16. Computerprogramm, das Anweisungen enthält, die, wenn sie in dem Prozessor eines Computers ausgeführt werden, die Schritte des Verfahrens nach Anspruch 12 ausführen.

## Revendications

1. Dispositif de commande industriel (100) pouvant fonctionner dans un mode de travail et un mode de veille, le dispositif de commande industriel comprenant :
une interface réseau (106) configurée pour communiquer avec un réseau externe (20) ;
un module d'attaque (108) configuré pour attaquer un appareil industriel (10) dont la puissance nominale est supérieure d'un ou de plusieurs ordres de grandeur à la puissance nominale de l'interface réseau ; et
un module de puissance (104) configuré pour alimenter directement le module d'attaque dans le mode de travail, un commutateur de puissance (102) connecté à une source de puissance d'entrée (30) et configuré pour alimenter le module de puissance en mode de travail, et pour alimenter l'interface réseau mais pas le module de puissance en mode de veille.

2. Dispositif de commande industriel (100) selon la revendication 1, dans lequel l'interface réseau (106) comprend :
une connexion de données (U1) vers le réseau externe (20) ; et
une connexion de puissance (U2), séparée de la connexion de données, vers le commutateur de puissance (102).

3. Dispositif de commande industriel (100) selon la revendication 1 ou 2, dans lequel le module de puissance (104) est configuré pour alimenter directement l'interface réseau (106) dans le mode de travail.

4. Dispositif de commande industriel (100) selon la revendication 1 ou 2, dans lequel le commutateur de puissance (102) est configuré pour ne pas alimenter l'interface réseau (106) dans le mode de travail.

5. Dispositif de commande industriel (100) selon la revendication 1 ou 2, dans lequel le commutateur de puissance (102) est configuré pour alimenter l'interface réseau (106) dans le mode de travail.

6. Dispositif de commande industriel (100) selon l'une quelconque des revendications précédentes, dans lequel le commutateur de puissance (102) est configuré pour connecter directement le module de puissance (104) à la source de puissance d'entrée (30) dans le mode de travail.

7. Dispositif de commande industriel (100) selon l'une quelconque des revendications précédentes, dans lequel le commutateur de puissance (102) est configuré pour fonctionner sélectivement en mode de travail ou en mode de veille conformément à une indication (U3) provenant de l'interface réseau (106).

8. Dispositif de commande industriel (100) selon l'une quelconque des revendications précédentes, dans lequel l'appareil industriel (10) est un robot industriel.

9. Dispositif de commande industriel (100) selon l'une quelconque des revendications précédentes, dans lequel l'interface réseau (106) comprend un dispositif de commande de sécurité (106.1) configuré pour signaler, via le réseau externe (20), un état de l'appareil industriel (10) dans le mode de travail et le mode de veille.

10. Dispositif de commande industriel (100) selon l'une quelconque des revendications précédentes, dans lequel l'interface réseau (106) comprend des circuits de traitement (106.2) configurés pour fonctionner à une fréquence d'horloge plus faible dans le mode de veille que dans le mode de travail.

11. Dispositif de commande industriel (100) selon l'une quelconque des revendications précédentes, dans lequel le commutateur de puissance (102) est adapté pour un rééquipement.

12. Procédé (200) de fonctionnement d'un dispositif de commande industriel (100), comprenant :
une interface réseau (106) pour communiquer avec un réseau externe (20) ;
un module d'attaque (108) pour attaquer un appareil industriel (10) dont la puissance nominale est supérieure d'un ou de plusieurs ordres de grandeur à la puissance nominale de l'interface réseau ;
un module de puissance (104) pour alimenter directement le module d'attaque et l'interface réseau ; et
un commutateur de puissance (102) connecté à une source de puissance d'entrée (30),
le procédé comportant les étapes suivantes :
recevoir (202) une indication indiquant s'il convient de fonctionner en mode de travail ou en mode de veille ;
en réponse à une indication de mode de travail,
amener (204) le commutateur de puissance à alimenter le module de puissance ; et
amener (206) le module de puissance à alimenter le module d'attaque ;
en réponse à une indication de mode de veille :
amener (208) le commutateur de puissance à alimenter l'interface réseau mais pas le module de puissance.

13. Procédé (200) selon la revendication 12, dans lequel l'indication (U3) est reçue (202) de l'interface réseau (106).

14. Procédé (200) selon la revendication 12 ou 13, comprenant en outre, en réponse à une indication de mode de veille, le fait d'amener (210) l'interface réseau à fonctionner à une fréquence d'horloge réduite.

15. Procédé (200) selon l'une quelconque des revendications 12 à 14, comprenant en outre l'étape suivante :
signaler (212) un état de l'appareil industriel (10) indépendamment de l'indication.

16. Programme informatique comprenant des instructions qui, lorsqu'elles sont exécutées dans le processeur d'un ordinateur, exécutent les étapes du procédé selon la revendication 12.
